(19) Europäisches Patentamt
European Patent Office
Office européen des brevets

(11) Veröffentlichungsnummer: **0 280 179 B1**

(12) **EUROPÄISCHE PATENTSCHRIFT**

(45) Veröffentlichungstag der Patentschrift: **16.12.92**

(51) Int. Cl.⁵: **C08L 67/02**, C08L 23/16, C08L 51/04, C08K 5/52, C08K 5/13, C08K 5/12

(21) Anmeldenummer: **88102317.0**

(22) Anmeldetag: **18.02.88**

(54) **Stabilisierte Mischungen aus thermoplastischem Polyester und kautschukelastischem Polymerisat, Verfahren zur Herstellung dieser Mischungen und ihre Verwendung zur Herstellung von Formkörpern.**

(30) Priorität: **25.02.87 DE 3706044**

(43) Veröffentlichungstag der Anmeldung:
**31.08.88 Patentblatt 88/35**

(45) Bekanntmachung des Hinweises auf die Patenterteilung:
**16.12.92 Patentblatt 92/51**

(84) Benannte Vertragsstaaten:
**DE FR GB IT**

(56) Entgegenhaltungen:
**EP-A- 0 002 821**
**EP-A- 0 023 291**
**EP-A- 0 032 681**
**DE-A- 2 902 468**
**US-A- 4 233 208**
**US-A- 4 404 161**

(73) Patentinhaber: **BAYER AG**
**W-5090 Leverkusen 1 Bayerwerk(DE)**

(72) Erfinder: **Buysch, Hans-Josef, Dr.**
**Brandenburger Strasse 28**
**W-4150 Krefeld(DE)**
Erfinder: **Köhler, Karl-Heinz, Dr.**
**Buschstrasse 165**
**W-4150 Krefeld(DE)**
Erfinder: **Rempel, Dieter, Dr.**
**Max-Beckmann-Strasse 35**
**W-5090 Leverkusen 1(DE)**
Erfinder: **Lindner, Christian, Dr.**
**Riehler Strasse 200**
**W-5000 Köln 60(DE)**

**EP 0 280 179 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Mischungen aus Polyalkylenterephthalat und kautschukelastischem Polymerisat, die gegen thermischen Abbau durch einen cyclischen sauren Phosphorigsäureester stabilisiert sind. Die Erfindung betrifft auch ein Verfahren zur Herstellung dieser Mischungen durch Zusammenschmelzen der Komponenten sowie ihre Verwendung zur Herstellung von Formkörpern, insbesondere von Spritzguß-Formkörpern.

Mischungen aus Polyalkylenterephthalat und kautschukelastischem Polymerisat sind bekannt; vgl. beispielsweise US-PS 3 706 699, DE-OS 1 694 200 = US-PS 3 591 659, US-PS 4 086 296, DE-OS 2 248 242 = US-PS 4 013 613 + 4 097 446, DE-PS 2 343 609 = US-PS 3 864 428, DE-OS 2 364 318 = US-PS 4 080 354, DE-PS 2 348 377 = US-PS 3 919 353, DE-PS 2 444 584 = US-PS 4 022 748, US-PS 4 111 892 und 4 257 929, DE-OS 2 726 256 = US-PS 4 096 202.

Diese Mischungen werden während ihrer Herstellung und Verarbeitung thermisch belastet, und zwar in der Regel mindestens je einmal beim Zusammenschmelzen der Komponenten (erfolgt üblicherweise durch Extrusion) und bei der Verarbeitung zu Formkörpern (meistens durch Spritzguß). Die thermische Belastung führt zu einem Molekulargewichtsabbau, insbesondere auch deshalb, weil die Komponenten mindestens teilweise - noch von ihrer Herstellung herrührend - Additive, z.B. Katalysatoren, enthalte die bei thermischer Belastung der Produkte Abbaureaktionen beschleunigen.

Es ist bekannt, thermoplastische Polyester mit Phosphorverbindungen, wie z.B. Phosphorigsäureestern, zu stabilisieren (DE-OS 2 352 037, 2 615 341, 3 036 391). Auch die Verwendung sterisch gehinderter Phenole für die Stabilisierung von Polyestern und Vinylpolymerisaten wird beschrieben (Ullmanns Encyclopädie der technischen Chemie, 4. Aufl., Bd. 8, 25-32, 39-41, Verlag Chemie, Weinheim 1974).

Ferner beschreibt EP-A 32 681 Stabilisatoren, die durch Reaktion von Triphenylphosphit mit einem durch tert. Butylgruppen sterisch gehinderten Bisphenol erhalten werden.

Es hat sich nun herausgestellt, daß Verbindungen, die thermoplastische Polyester hervorragend zu stabilisieren vermögen (z.B. solche gemäß DE-OS 2 615 341), bei Mischungen aus thermoplastischem Polyester und kautschukelastischem Polymerisat nur mäßige Ergebnisse bewirken. Da unerwünschte Abbaureaktionen regelmäßig auch zu einer Verschlechterung mechanischer Eigenschaften führen, war es Aufgabe der Erfindung, besser stabilisierte Mischungen aus thermoplastischem Polyester und kautschukelastischem Polymerisat bereitzustellen.

Überraschenderweise wurde nun gefunden, daß bestimmte cyclische Phosphorigsäureester diese Aufgabe lösen.

Gegenstand der Erfindung sind also Mischungen aus

65 bis 99, vorzugsweise 75 bis 90, Gew.-%
Polyalkylenterephthalat P, welches ein Reaktionsprodukt aus aromatischen Dicarbonsäuren oder ihren reaktionsfähigen Derivaten und aliphatischen, cycloaliphatischen oder araliphatischen Diolen und Mischungen dieser Reaktionsprodukte ist, und

35 bis 1, vorzugsweise 25 bis 10, Gew.-%
kautschukelastischem Polymerisat Q mit einer Glasübergangstemperatur unter -30 °C, vorzugsweise unter -40 °C,

wobei sich die Prozentangaben auf die Summe P + Q beziehen,
dadurch gekennzeichnet, daß die Mischungen 0,01 bis 3, vorzugsweise 0,1 bis 2, Gew.-%, bezogen auf die Summe P + Q, Phosphorigsäureester der Formel

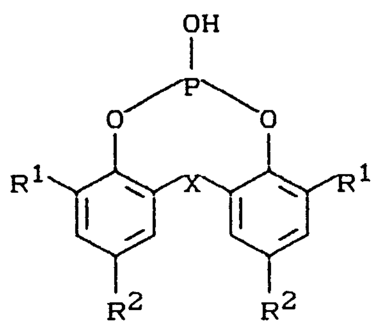

(I)

worin

$R^1$ tert.- $C_4$-$C_8$- Alkyl,
$R^2$ $C_1$-$C_8$-Alkyl und
X -$CH_2$ oder

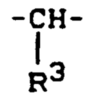

mit $R^3$ = $C_1$-$C_4$-Alkyl
bedeuten,
und 0,01 bis 3, vorzugsweise 0,1 bis 2,5, Gew.-%, bezogen auf die Summe P + Q, phenolisches Antioxydans und weiterhin synergistisch wirkende Thioether enthalten.

Polyalkylenterephthalate P im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate P lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Carl Hanser Verlag, München 1973).

Bevorzugte Polyalkylenterephthalate P enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate P können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die Bevorzugten Polyalkylenterephthalate P können neben Ethylenglykol- bzw. Butandiol-1,4-resten bis zu 20 Mol-%, vorzugsweise bis zu 10 Mol-%, anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,3, 3-Ethylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-β-hydroxyethoxyphenyl)-propan und 2,2-Bis-(4-hydroxypropoxyphenyl)-propan (DE-OS 2 407 674, 2 407 776, 2 715 932).

Die Polyalkylenterephthalate P können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden.

Beispiele bevorzugter Verzweigungsmittel sind Trimesinsäure, Trimellithsäure, Trimethylolethan und -propan und Pentaerythrit.

Besonders bevorzugt sind Polyalkylenterephthalate P, die allein aus Terephthalsäure oder deren reaktionsfähigen Derivaten (z.B. deren Dialkylestern) udn Ethylenglykol und/oder Butandiol-1,4 hergestellt worden sind, und Mischungen dieser Polyalkylenterephthalate.

Bevorzugte Mischungen enthalten 1 bis 50, vorzugsweise 1 bis 30, Gew.-% Polyethylenterephthalat und 50 bis 99, vorzugsweise 70 bis 99, Gew.-% Polybutylenterephthalat.

Die als Komponente P vorzugsweise verwendeten Polyalkylenterephthalate besitzen im allgemeinen eine Intrinsic-Viskosität von 0,4 bis 1,5 dl/g, vorzugsweise 0,6 bis 1,3 dl/g, insbesondere 1,0 bis 1,3 dl/g, jeweil gemessen in Phenol/o-Dichlorbenzol (1:1 Gewichtsteile) bei 25 °C im Ubbelohde-Viskosimeter.

Die Polymerisate Q mit einer Glasübergangstemperatur unter -30 °C umfassen Copolymerisate - insbesondere Pfropfcopolymerisate - mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden oder Organischen Chemie" (Houben-Weyl), Bd. 14/1, Georg Thieme Verlag, Stuttgart 1961, S. 393-406 und in C.B. Bucknall, "Toughened Plastics", Appl. Science Publishers, London 1977, beschrieben sind. Bevorzugte Polymerisate Q sind mindestens partiell vernetzt und besitzen Gelgehalte vone über 20, vorzugsweise über 40 Gew.-%, insbesondere über 60 Gew.-%.

Bevorzugte Polymerisate Q sind Ethylen/Vinylacetat-Copolymerisate mit 15 bis 60 Gew.-% Vinylacetatresten und Schmelzindices von nicht fließfähig bis 1.000, vorzugsweise von 0,1 bis 20, gemessen bei 180 °C und 2,16 kg Belastung nach DIN 53 735.

Bevorzugte Polymerisate Q sind z.B. auch die sogenannten EPM- bzw. EPDM-Dautschuke, in denen das Gewichtsverhältnis von Ethylen- zu Propylenresten im Bereich von 40:60 bis 65:35 liegt.

Die Mooney-Viskositäten ($ML_{1-4}$/100 °C) der EPM- bzw. EPDM-Kautschuke können zwischen 25 bis 200, vorzugsweise zwischen 35 bis 120, liegen.

Die verwendeten Ethylen/Propylen-Copolymerisate (EPM) besitzen praktisch keine Doppelbindungen, während die Ethylen/Propylen/Dien-Terpolymerisate (EPDM) 1 bis 20 Doppelbindungen/1.000 C-Atome aufweisen können. Als geeignete Dien-Monomere im EPDM seien beispielsweise genannt: konjugierte Diene, z.B. Isopren und Butadien-1,3, und nichtkonjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkyliden- und Alkenylnorbornene, z.B. 5-Ethyliden-2-norbornen, 5-Butyliden-2-norbornen, 2-Methallyl-5-norbornen, 2-Isopropenyl-5-norbornen und Tricyclodiene.

Bevorzugt sind die nichtkonjugierten Diene Hexadien 1,5, Ethyliden-norbornen oder Dicyclopentadien. Der Diengehalt im EPDM beträgt vorzugsweise 0,5 bis 10 Gew.-%, bezogen auf EPDM.

Derartige EPM- bzw. EPDM-Kautschuke sind z.B. in der DE-OS 2 808 709 beschrieben.

Bevorzugte Polymerisate Q sind auch selektiv hydrierte Blockcopolymerisate eines vinylaromatischen Monomeren und eines konjugierten Diens. Diese Blockcopolymerisate sind bekannt. Im allgemeinen kann für die Herstellung der geeigneten Blockcopolymerisate aus Styrol, α-Methylstyrol, Vinyltoluol usw. und aus konjugierten Dienen, wie Butadien, Isopren usw., die für die Herstellung von Styrol-Dien-Blockcopolymerisaten verwendete Technologie benutzt werden, die in "Encyclopedia of Polymer Science and Technology", Bd. 15, Interscience, N.Y. (1971) auf den Seiten 508 ff. beschrieben ist. Die selektive Hydrierung kann auf an sich bekannte Weise durchgeführt werden, wobei die ethylenischen Doppelbindungen im wesentlichen vollständig hydriert werden, während die aromatischen Doppelbindungen im wesentlichen unbeeinflußt bleiben. Derartige selektive hydrierte Blockcopolymerisate werden z.B. in der DE-OS 3 000 282 beschrieben.

Besonders bevorzugte Polymerisate Q sind Pfropfpolymerisate.

Bevorzugte Pfropfpolymerisate Q besitzen mittlere Teilchendurchmesser $d_{50}$ von 0,05 bis 1, vorzugsweise von 0,1 bis 0,8, insbesondere von 0,1 bis 0,5 µm.

Der mittlere Teilchendurchmesser $d_{50}$ ist der Durchmesser, oberhalb und unterhalb dessen jeweils 50 Gew.-% der Teilchen liegen. Er kann mittels Ultrazentrifugen-Messungen (W.Scholtan, H. Lange, Kolloid, Z. und Z. Polymere 250 (1972), 782-796) oder mittels Elektronenmikroskopie und anschließende Teilchenauszählung (G. Kämpf, H. Schuster, Angew. Makromolekulare Chemie 14, (1970), 111-129) bestimmt werden.

Bevorzugte Pfropfpolymerisate Q sind vernetzt und haben Gelgehalte von mindestens 50 Gew.-%, vorzugsweise mindestens 80 Gew.-% und insbesondere von mindestens 90 Few.-%, bezogen auf Pfropfpolymerisat Q.

Der Gelgehalt vernetzter Dienkautschuke wird bei 25 °C in Toluol, der Gelgehalt vernetzter Acrylatkautschuke bei 25 °C in Dimethylformamid bestimmt (M. Hoffmann, H.Krömer, R. Kuhn, Polymeranalytik I und II, Georg Thieme Verlag Stuttgart 1977).

Bevorzugte Pfropfpolymerisate Q sind Pfropfpolymerisate von 15 bis 60, vorzugsweise 20 bis 50, insbesondere 25 bis 40 Gew.-%, wenigstens eines Vinyl- oder Vinylidenmonomeren aus der Reihe Styrol, α-Methylstyrol, Acrylnitril, $C_1$-$C_8$-Alkylacrylat, $C_1$-$C_8$-Alkymethacrylat, Hydroxy-$C_2$-$C_8$-alkyl(meth)acrylat, Epoxy-$C_2$-$C_8$-alkyl-(meth)acrylat auf 40 bis 85, vorzugsweise 50 bis 80, insbesondere 60 bis 75 Gew.-%, teilchenförmigem vernetztem Dien- oder Acrylatkautschuk, jeweils bezogen auf Pfropfpolymerisat Q.

Bevorzugte Pfropfmonomere sind Methylmethacrylat sowie Mischungen aus Styrol und Methylmethacrylat und Mischungen aus Styrol und Acrylnitril.

Bevorzugte Dienkautschuke sind vernetzte Homo- und/oder Copolymerisate aus konjugierten $C_4$-$C_6$-Dienen. Bevorzugtes Dien ist Butandien-1,3. Die Diencopolymerisate können neben den Dienresten bis zu 30 Gew.-%, bezogen auf Diencopolymerisat, Reste anderer ethylenisch ungesättigter Monomerer, wie z.B. Styrol, Acrylnitril, Ester der Acryl- oder Methacrylsäure mit einwertigen $C_1$-$C_4$-Alkoholen, wie z.B. Methylacrylat, Ethylacrylat, Methylmethacrylat, Ethylmethacrylat, enthalten.

Die Herstellung der Dienkautschuk-Pfropfgrundlage und der daraus hergestellten Pfropfpolymerisate wird z.B. in "Methoden der Organischen Chemie" (Houben-Weyl), Bd.14/1, Georg Thieme Verlag, Stuttgart 1961, S. 393-406, sowie in Ullmanns Ecyclopädie der technischen Chemie, 4. Auflage, Bd. 19, Verlag Chemie, Weinheim, 1981, S. 279 bis 284, beschrieben.

Bevorzugte Pfropfgrundlagen auf Basis Acrylatkautschuk sind Polymerisate, die durch Polymerisation von $C_1$-$C_8$-Alkylacrylaten erhalten werden. Die Polymerisate können auch Copolymerisate der Acrylsäureester mit bis zu 40 Gew.-%, bezogen auf Copolymerisat, anderer Vinylmonomerer, wie Styrol, Acrylnitril, Methylmethacrylat, Vinylester, Vinylether, sein.

Bevorzugte Beispiels für vernetzende Monomere mit mehr als einer copolymerisierbaren Doppelbindung sind Ester ungesättigter $C_3$-$C_{12}$-Monocarbonsäure und ungesättigter einwertiger $C_3$-$C_{12}$-Alkohole oder gesättigter $C_2$-$C_{20}$-Polyole mit 2 bis 4 OH-Gruppen, wie z.B. mehrfach ungesättigte heterocyclische Verbindungen, wie Trivinyl-, Triallylcyanurat und -isocyanurat; insbesondere Triallylcyanurat; polyfunktionelle Vinylverbindungen, wie Di-und Trivinylbenzole; aber auch Triallylphosphat.

Bevorzugte vernetzende Monomere sind Allylmethacrylat, Ethylenglykoldimethacrylat, Diallylphthalat und heterocyclische Verbindungen, die mindestens drei copolymerisierbare ethylenisch ungesättigte Doppelbindungen aufweisen.

Besonders bevorzugte vernetzende Monomere sind die cyclischen Monomeren Triallylcyanurat, Triallylisocyanurat, Trivinylcyanurat, Tris-acryloylhexahydro-s-triaxin, Triallylbenzole.

Die Menge der bernetzenden Monomeren beträgt vorzugsweise 0,02 bis 5, insbesondere 0,05 bis 2 Gew.-%, bezogen auf Kautschuk-Pfropfgrundlage.

Bei cyclischen, vernetzenden Monomeren mit mindestens drei ethylenisch ungesättigten Doppelbindungen ist es vorteilhaft, nicht mehr als 1 Gew.-%, bezogen auf Kautschuk-Pfropfgrundlage, zu verwenden.

Acrylatkautschuke können auch mehrschalige Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und anpolymerisiertes Acrylatmonomer als Schale enthalten.

Der Anteil des Polydien-Kerns in solchen mehrschaligen Kautschuken kann 0,1 bis 80, bevorzugt 10 bis 50 Gew.-% betragen. Schale(n) und Kern können unabhängig voneinander teilvernetzt oder hochvernetzt sein.

Bevorzugte gepfropfte Acrylatkautschuke sind solche, die

a) mit cyclischen trifunktionellen Comonomeren wie Triallylcyanurat oder Triallylisocyanurat vernetzt sind (beschrieben in DE-OS 3 039 114);

b) einen Polybutadien-Kern enthalten (beschrieben in DE-OS 3 039 114);

c) hergestellt wurden "in Abwesenheit von Suspendiermittel" (beschrieben in DE-OS 3 117 052).

Bei der Herstellung der Pfropfpolymerisate Q durch Pfropfcopolymerisation, die üblicherweise in Gegenwart von Radikalstartern, z.B. wasserlöslichen Initiatoren, Emulgatoren oder Komplexbildnern/Pfropfaktivatoren sowie Reglern durchgeführt wird, bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren.

Pfropfpolymerisate Q im Sinne der Erfindung sind deshalb durch Polymerisation von Pfropfmonomeren in Gegenwart des Kautschuklatex erhaltene Produkte, genau genommen also im allgemeinen ein Gemisch aus Pfropfcopolymerisat und freiem (Co)polymerisat der Pfropfmonomeren.

Die erfindungsgemäßen Mischungen weisen optimale Eigenschaften auf, wenn die Menge an freiem (Co)Polymerisat 15 Gew.-%, vorzugsweise 10 Gew.-%, insbesondere 7 Gew.-%, bezogen aug Komponente Q, nicht übersteigt. Der Staudinger-Index dieser freien (Co)Polymerisate soll weniger als 0,6 dl/g, vorzugsweise weniger als 0,4 dl/g betragen, gemessen im Dimethylformamid bei 25 °C.

Bevorzugte gepfropfte Dienkautschuke sind z.B. in der DE-PS 2 348 377 und in den DE-OS 2 927 576, 3 025 605, bevorzugte gepfropfte Acrylatkautschuke z.B. in der DE-PS 2 444 584 und in den DE-OS 2 726 256, 3 039 114, 3 039 115, 3 117 052 beschrieben.

Bevorzugte als Stabilisatoren erfindungsgemäß zu verwen dende cyclische Phosphorigsäureester sind Verbindungen der Formel (I), worin

$R^1$ tert.-Butyl, tert.-Amyl oder tert.-Diisobutyl,

$R^2$ Methyl, Ethyl Isopropyl, tert.-Butyl, tert.-Amyl oder tert.-Diisobutyl und

X $-CH_2-$,

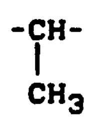 oder 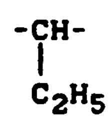

bedeuten.

Besonders bevorzugte Stabilisatoren sind Verbindungen der Formel (I), worin

$R^1$ tert.-Butyl oder tert.-Amyl,

$R^2$ Methyl, Ethyl oder tert.-Butyl und
X $-CH_2-$ bedeuten.

Die Verbindungen I und ihre Herstellung sind bekannt (EP-PS 23 291).

Geeignete phenolische Antioxidantien sind in Ullmanns Encyclopädie der technischen Chemie, 4. Aufl., Bed. 8, S. 25-31, beschrieben.

Bevorzugte phenolische Antioxidantien sind Verbindungen der Formel

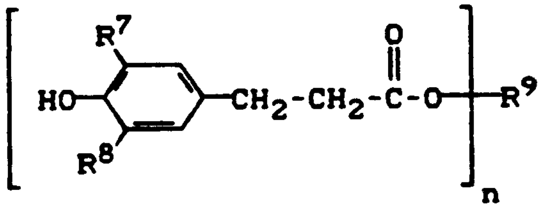 (II)

worin
$R^7$ $C_4$-$C_8$ tert.-Alkyl, vorzugsweise tert.-Butyl, tert.-Amyl und tert.-Diisobutyl,
$R^8$ $C_1$-$C_8$-Alkyl, vorzugsweise Methyl und tert. -Butyl,
$R^9$ $C_8$-$C_{18}$-Alkyl, vorzugsweise $C_{14}$-$C_{18}$-Alkyl, oder $C_2$-$C_{12}$-Alkylen und
n 1 oder 2
bedeuten.

Ein besonders bevorzugtes phenolisches Antioxidans ist die Verbindung der Formel (II), worin
$R^7$, $R^8$ tert.-butyl
$R^9$, $C_{17}H_{35}$ und
n 1 bedeuten

Diese Verbindungen II und Verfahren zu ihrer Herstelung sind aus DE-AS 1 201 343, DE-OS 1 543 644 und DE-OS 21 503 327 bekannt.

Zusätzlich zu den phenolischen Antioxidantien enthalten die erfindungsgemäßen Mischungen synergistisch wirkende Thioether enthalten, wie sie in Ullmanns Encyclopädie dar technischen Chemie, 4. Aufl., Bd. 8, S. 37 unten bis S. 38, oben, beschrieben sind. Bevorzugte Thioether sind Thiodipropionate der Formel

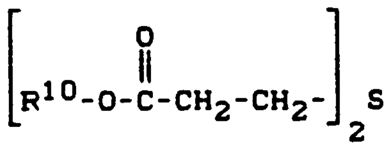 (III)

worin
$R^{10}$ $C_8$-$C_{18}$-, vorzugsweise $C_{12}$-$C_{18}$-Alkyl, insbesondere n-Dodecyl und n-Stearyl,
bedeutet.

Die erfindungsgemäßen Mischungen können neben den obligatorischen Stabilisatoren und phenolischen Antioxidantien übliche Zusätze, wie z.B. Entformungshilfsmittel, Mittel zur Verbesserung der Oberflächengleiteigenschaften, Fließhilfsmittel, Kristallisationshilfsmittel, Antistatika, UV-Stabilisatoren, Stabilisatoren gegen hydrolytischen Abbau, anorganische und/oder organische Farbpigmente bzw. Farbstoffe und übliche Flammschutzmittel enthalten.

Die Herstellung der erfindungsgemäßen Mischungen kann in üblichen Mischaggregaten, wie Walzen, Knetern, Einund Mehrwellenextrudern erfolgen. Die Stabilisatoren können den Komponenten P und/oder Q bei deren Herstellung, nach ihrer Herstellung (z.B. durch Auftrudeln auf das Granulat) oder beim Mischen der Komponenten P und Q, zweckmäßigerweise in Form eines Konzentrats (Pulver oder Granulat) in Polyester P und/oder Polymerisat Q, zugesetzt werden.

Weiterer Gegenstand der Erfindung ist also ein Verfahren zur Herstellung stabilisierter Mischungen aus Polyalkylenterephthalat und kautschukelastischem Polymerisat durch Zusammenschmelzen der Komponenten bei Temperaturren, die vorzugsweise mindestens 20 °C und höchstens 70 °C über dem Schemzpunkt des Polyesters P liegen.

Das Herstellverfahren kann diskontinuierlich oder kontinuierlich unter Bedingungen durchgeführt werden,

bei denen eine Oxidation weitgehend ausgeschlossen ist, d.h. unter inertem Schutzgas, wie z.B. Stickstoff, Kohlendioxid oder Argon, und/oder unter vermindertem Druck.

Die erfindungsgemäßen Mischungen können einer thermischen Nachbehandlung in der festen Phase bei Temperaturen oberhalb 100 ° C, vorzugsweise oberhalb 180 ° C, unterzogen werden.

Die erfindungsgemäßen Mischungen können zur Herstellung von Formkörpern, die für hohe Stoßbelastungen geeignet sind, wie z.B. Stoßfänger, Spoiler, Rammleisten im Kfz-Bereich, dienen.

Die Bedingungen für die Verarbeitung der erfindungsgemäßen Mischungen sollten so gewählt werden, daß die Massetemperatur der Schemelze mindestens 20 ° C, höchstens 50 ° C, oberhalb des Schmelzpunktes des Polyesters liegt. Die Verweilzeit der Schemelze in der Apparatur sollte unter den angegebenen Temperaturbedingungen nicht länger als 9 Minuten, vorzugsweise nicht länger als 6 Minuten, sein.

Die erfindungsgemäßen Mischungen zeigen unter thermischer Belastung einen stark verminderten Molekulargewichtsabbau, erkennbar an der geringen Viskositätsminderung und an der geringen Zunahme des Gehalts an Carboxyl-Endgruppen. Dies bedeutet aber auch ein weitgehendes Erhalten der hervorragenden mechanischen Eignschaften, wie z.B: Dehnfähigkeit und Tieftemperatur-Bruchverhalten.

Beispiele

Stabilisator A
(Vergleich)

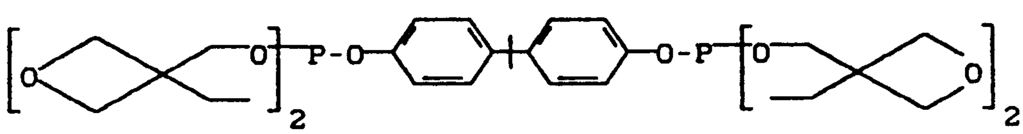

entsprechend DE-OS 2 615 341

Stabilisator B
(Vergleich)

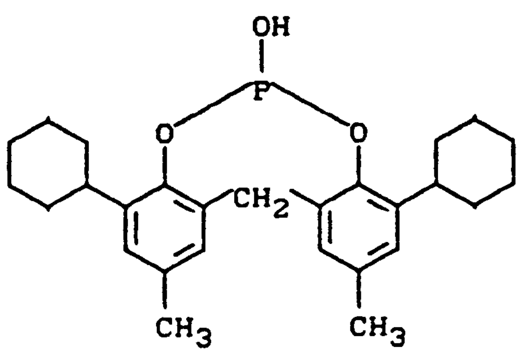

entsprechend EP-PS 23 291

Stabilisator C
(erfindungsgemäß)

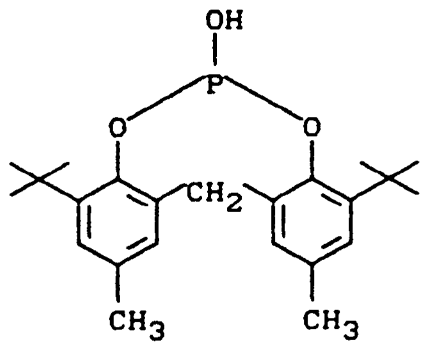

Stabilisator E

Kombination üblicher Stabilisatoren:

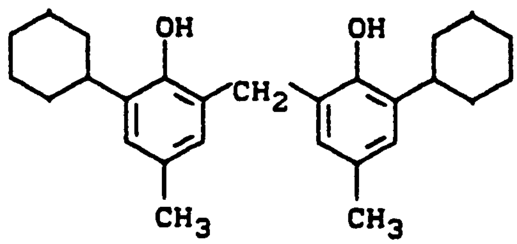

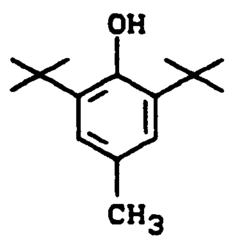

0,2 Gew.-Teile 0,8 Gew.-Teile

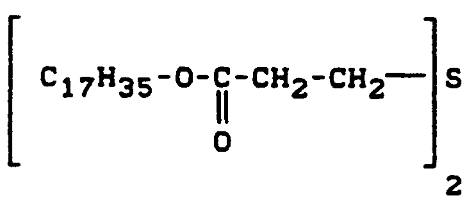

0,8 Gew.-%

PBT

Polybutylenterephthalat mit einer Intrinsic-Viskosität von 1,20 dl/g, gemessen in Phenol/o-Dichlorbenzol (Gewichtsverhältnis 1:1) bei 25° C im Ubbelohde-Viskosimeter (Polyester P).

Polymerisat

Pfropfpolymerisat mit einem mittleren Teilchendurchmesser $d_{50}$ von 0,5 µm aus 75 Gew.-% Polybutadien-Pfropfgrundlage (Gelgehakt 85 Gew.-%) und 25 Gew.-% Pfropfauflage aus 72 Gewichtsteilen Styrol und 28 Gewichtsteilen Acrylnitril (Polymerisat Q), enthaltend 1,8 Gew.-% Stabilisator.

Stabilisator C

Zu 310 g (1,0 Mol) Triphenylphosphit tropfte man innerhalb von 30 Minuten unter Rühren und Stickstoff bei 70 bis 80° C 18 g (1,0 Mol) Wasser und rührte noch 3 Stunden bei 80° C. Zu diesem Gemisch gab man 340 g (1,0 Mol) Bis(2-hydroxy-3-tert.-butyl-5-methyl-phenyl)-methan und erhitzte unter Rühren bei 20 mbar, bis bei einer Kopftemperatur von 80° C Phenol abzudestillieren begann. Die Sumpftemperatur wurde

allmählich auf 200 °C erhöht. Nach Ende der Destillation verblieb als Rückstand die gewünschte Verbindung: ein gelbliches, glasiges, sprödes Material mit einem Schmelzpunkt von 150 bis 156 °C.

Herstellung thermoplastischer Formmassen

Die Komponenten, die in Form von Granulat (PBT), als Pulver (Polymerisat Q), also Pulvermischung in gemahlenem PBT (Stabilisatoren und Antioxidantien) bzw. in Granulatform als Konzentrat in PBT (Entformungsmittel) vorlagen, wurden auf einem Zweiwellenextruder in der Schmelze gemischt und extrudiert (Massetemperaturen: 270 bis 280 °C, Durchsatz: 8 kg/Stunde, Schneckendrehzahl: 100 U/Minute). Der Schmelzstrang wurde in Wasser gekühlt, trocken geblasen, granuliert und bei erhöhter Temperatur getrocknet. Das getrocknete Granulat wurde auf einer üblichen Spritzgußmaschine bei Massetemperaturen von 250 bis 270 °C, Formtemperaturen von 80 °C un deiner Verweilzeit im Schneckenzylinder von 6 bis 9 Minuten zu Norm-Prüfstäben verspritzt.

Beispiel 1

Stabilisierung von PBT (Vergleich)

Die Komponenten wurden in den aus der Tabelle zu entnehmenden Mengen (Gew.-%) eingesetzt. Die erhaltenen Granulate wurden bei 180 °C an der Luft gealtert. Ihre Lösungsviskosität wurden in verschiedenen zeitlichen Abständen gemessen.

| | a | b | c | d |
|---|---|---|---|---|
| PBT | 99,6 % | 99,4 % | 99,4 % | 99,4 % |
| Formtrennmittel | 0,4 % | 0,4 % | 0,4 % | 0,4 % |
| Stabilisator | | | | |
| Typ | - | A | B | C |
| Menge | - | 0,2 % | 0,2 % | 0,2 % |
| Viskosität $\eta_{rel}$* nach | | | | |
| 0 Tagen Alterung | 1,520 | 1,574 | 1,612 | 1,651 |
| 6 Tagen Alterung | 1,458 | 1,591 | 1,623 | 1,613 |
| 10 Tagen Alterung | 1,393 | 1,613 | 1,594 | 1,532 |
| 21 Tagen Alterung | 1,291 | 1,557 | 1,501 | 1,412 |

Der Vergleich zeigt, daß die beiden Stabilisatoren A und B des Standes der Technik den erfindungsgemäß zu verwendenden Stabilisator C bei der Stabilisierung von Kautschuk-freiem PBT deutlich übertreffen.

* gemessen als 0,65 gew.-%ige Lösung in Phenol/o-Dichlorbenzol 1/1 bei 25° C.

Beispiel 2

Stabilisierung von PBT/Kautschuk-Mischungen

Die Komponenten wurden in den aus der Tabelle zu entnehmenden Mengen (Gew.-%) eingesetzt. Aus

den Lösungsviskositäten der durch Extrusion bei 250 ° C und besonders bei 270 ° C hergestellten Granulate und den mechanischen Werten (Kerbschlagzähigkeit bei tiefen Temperaturen und Reißdehnung) resultiert klar die Überlegenheit von Stabilisator C gemäß Erfindung.

| | a (Vergleich) | b (Vergleich) | c (Vergleich) | d (erfindungsgemäß) |
|---|---|---|---|---|
| PBT | 76,7 % | 76,4 % | 76,4 % | 76,4 % |
| Polymerisat Q^x | 23,0 % | 23,0 % | 23,0 % | 23,0 % |
| Formtrennmittel | 0,3 % | 0,3 % | 0,3 % | 0,3 % |
| Stabilisator | | | | |
| Typ | - | A | B | C |
| Menge | - | 0,3 % | 0,3 % | 0,3 % |
| Viskosität $\eta_{rel}$* vor Verarbeitung: | 1,546 | 1,650 | 1,631 | 1,641 |
| nach Verarbeitung | | | | |
| bei 250°C: | 1,468 | 1,661 | 1,638 | 1,655 |
| bei 270°C: | 1,395 | 1,546 | 1,560 | 1,647 |
| Kerbschlagzähigkeit $a_k$ (kJ/m²) bei: | | | | |
| 0°C (250°C) | 18 | 38 | 33 | 45 |
| (270°C) | 10 | 35 | 21 | 41 |
| -10°C (250°C) | | | | |
| (270°C) | | | | |
| -20°C (250°C) | 11 | 19 | 18 | 34 |
| (270°C) | 8 | 16 | 14 | 19 |
| Reißdehnung $E_R$ (%) | | | | |
| (250°C) | 68 | 72 | 113 | 199 |
| (250°C) | 35 | 87 | 74 | 108 |

x enthält 1,8 Gew.-% Stabilisator E

## Patentansprüche

**1.** Mischung aus
65 bis 99 Gew.-% Polyalkylenterephthalat P, welches ein Reaktionsprodukt aus aromatischen Dicarbonsäuren oder ihren reaktionsfähigen Derivaten und aliphatischen, cycloaliphatischen oder araliphatischen Diolen und Mischungen dieser Reaktionsprodukte ist, und
35 bis 1 Gew.-% kautschukelastischem Polymerisat Q mit einer Glasübergangstemperatur unter -30 ° C, wobei sich die Prozentangaben auf die Summe P + Q beziehen,
dadurch gekennzeichnet, daß die Mischungen 0,01 bis 3 Gew.-%, bezogen auf die Summe P + Q, Phosphorigsäureester der Formel

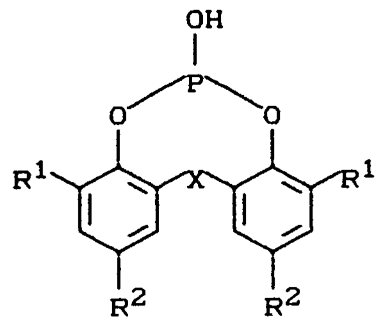

(I)

worin
$R^1$ tert.- $C_4$-$C_8$- Alkyl,
$R^2$ $C_1$-$C_8$-Alkyl und
X -$CH_2$ oder

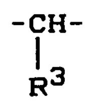

mit $R^3$ = $C_1$-$C_4$-Alkyl
bedeuten,
und 0,01 bis 3 Gew.-%, bezogen auf die Summe P + Q, phenolisches Antioxydans und und weiterhin synergistisch wirkende Thioether enthalten.

**2.** Mischungen nach Anspruch 1, dadurch gekennzeichnet, daß sie
75 bis 90 Gew.-% Polyalkylenterephthalat P und
25 bis 10 Gew.-% Polymerisat Q enthalten.

**3.** Mischungen nach Ansprüchen 1 und 2, dadurch gekennzeichnet, daß sie 0,1 bis 2 Gew.-% Phosphorigsäureester I enthalten.

**4.** Mischungen nach Ansprüchen 1 bis 3, dadurch gekennzeichnet, daß der Phosphorigsäureester eine Verbindung der Formel (I) ist, worin $R^1$ tert.-Butyl, $R^2$ Methyl und X Methylen bedeuten.

**5.** Mischungen nach Ansprüchen 1 bis 4, dadurch gekennzeichnet, daß sie 0,1 bis 2,5 Gew.-% phenolisches Antioxidans enthalten.

**6.** Mischungen nach Anspruch 5, dadurch gekennzeichnet, daß das phenolische Antioxidans der Formel

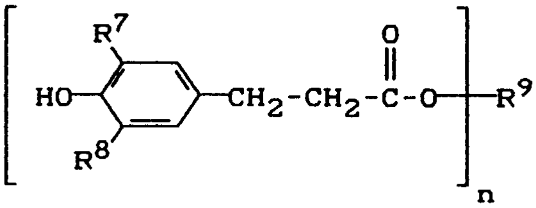

(II)

entspricht, worin

R7 $C_4$-$C_8$ tert.-Alkyl,
R8 $C_1$-$C_8$-Alkyl,
R9 $C_8$-$C_{18}$-Alkyl oder $C_2$-$C_{12}$-Alkylen und
n 1 oder 2

bedeuten.

**7.** Mischungen nach Anspruch 6, dadurch gekennzeichnet, daß
$R^7$, $R^8$ tert.-Butyl,
$R^9$ $C_{17}H_{35}$ und
n 1 bedeuten.

**8.** Verfahren zur Herstellung der Mischungen nach Ansprüchen 1 bis 7 durch Zusammenschmelzen der Komponenten.

**9.** Verwendung der Mischungen nach Ansprüchen 1 bis 7 zur Herstellung von Formkörpern.

**Claims**

**1.** A mixture of
65 to 99% by weight polyalkylene terephthalate P, which is a reaction product of aromatic dicarboxylic acids or reactive derivatives thereof and aliphatic, cycloaliphatic or araliphatic diols and mixtures of these reaction products, and
35 to 1% by weight rubber-elastic polymer Q having a glass transition temperature below -30 °C,
the percentages being based on the sum of P + Q,
characterized in that the mixtures contain 0.01 to 3% by weight, based on the sum of P + Q, of phosphorous acid esters corresponding to the following formula

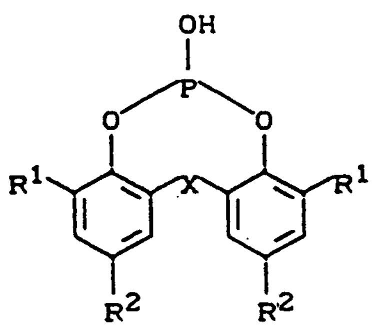

(I)

in which

$R^1$ represents tert. $C_{4-8}$ alkyl,
$R^2$ represents $C_{1-8}$ alkyl and
X represents $-CH_2$ or

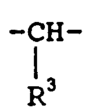

with $R^3$ = $C_{1-4}$ alkyl,

and 0.01 to 3% by weight, based on the sum of P + Q, of a phenolic antioxidant and also synergistically acting thioethers.

**2.** Mixtures as claimed in claim 1, characterized in that they contain
75 to 90% by weight polyalkylene terephthalate P and
25 to 10% by weight polymer Q.

**3.** Mixtures as claimed in claims 1 and 2, characterized in that they contain from 0.1 to 2% by weight phosphorous acid ester I.

**4.** Mixtures as claimed in claims 1 to 3, characterized in that the phosphorous acid ester is a compound corresponding to formula (I) in which $R^1$ is tert. butyl, $R^2$ is methyl and X is methylene.

**5.** Mixtures as claimed in claims 1 to 4, characterized in that they contain 0.1 to 2.5% by weight phenolic antioxidant.

**6.** Mixtures as claimed in claim 5, characterized in that the phenolic antioxidant corresponds to the following formula

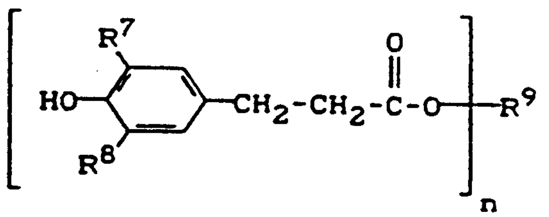

(II)

in which

| | |
|---|---|
| $R^7$ | represents $C_{4-8}$ tert. alkyl, |
| $R^8$ | represents $C_{1-8}$ alkyl, |
| $R^9$ | represents $C_{8-18}$ alkyl or $C_{2-12}$ alkylene and |
| n = | 1 or 2. |

**7.** Mixtures as claimed in claim 6, characterized in that
$R^7$ and $R^8$ are tert. butyl,
$R^9$ is $C_{17}H_{35}$ and
n = 1.

**8.** A process for the production of the mixtures claimed in claims 1 to 7 by melting the components together.

**9.** The use of the mixtures claimed in claims 1 to 7 for the production of mouldings.

## Revendications

**1.** Mélange de
65 à 99 % en poids d'un téréphtalate de polyalkylène P consistant en un produit de réaction d'acides dicarboxyliques aromatiques ou de leurs dérivés réactifs et de diols aliphatiques, cycloaliphatiques ou araliphatiques et mélanges de ces produits de réaction, et
35 à 1 % en poids d'un polymère élastique analogue à un caoutchouc Q, ayant une température de transition du second ordre inférieure à -30 °C,
les pourcentages indiqués se rapportant à la somme P + Q,
caractérisé en ce qu'il contient de 0,01 à 3 % en poids, par rapport à la somme P + Q, d'esters phosphoreux de formule

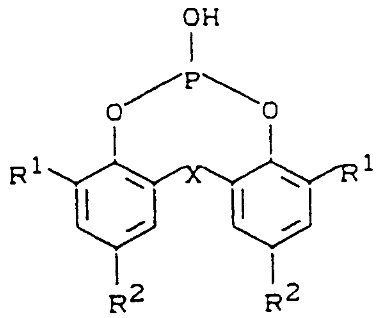

(I)

dans laquelle

$R^1$ représente un groupe tert-alkyle en $C_4$-$C_8$,

$R^2$ représente un groupe alkyle en $C_1$-$C_8$ et

X représente $-CH_2-$ ou

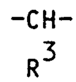

avec $R^3$ = alkyle en $C_1$-$C_4$,

et 0,01 à 3 % en poids, par rapport à la somme P + Q, d'un antioxydant phénolique, et en outre des thioéthers à activité synergétique.

**2.** Mélanges selon la revendication 1, caractérisé en ce qu'ils contiennent
75 à 90 % en poids du téréphtalate de polyalkylène P et
25 à 10 % en poids du polymère Q.

**3.** Mélanges selon les revendications 1 et 2, caractérisés en ce qu'ils contiennent de 0,1 à 2 % en poids d'esters phosphoreux I.

**4.** Mélanges selon les revendicationss 1 à 3, caractérisés en ce que l'ester phosphoreux est un composé de formule I dans laquelle $R^1$ représente un groupe tert-butyle, $R^2$ un groupe méthyle et X le groupe méthylène.

**5.** Mélanges selon les revendications 1 à 4, caractérisés ence qu'ils contiennent de 0,1 à 2,5 % en poids d'un antioxydant phénolique.

**6.** Mélanges selon la revendication 5, caractérisés en ce que l'antioxydant phénolique répond à la formule

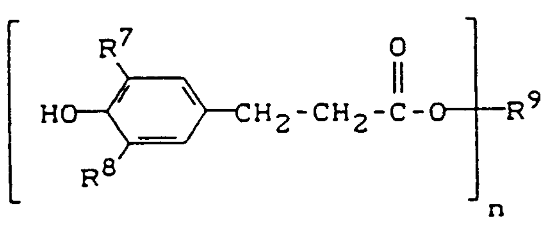

(II)

dans laquelle

$R^7$ représente un groupe tert-alkyle en $C_4$-$C_8$,

$R^8$ représente un groupe alkyle en $C_1$-$C_8$,

$R^9$ représente un groupe alkyle en $C_8$-$C_{18}$ ou alkylène en $C_2$-$C_{12}$ et

n est égal à 1 ou 2.

**7.** Mélanges selon revendication 6, caractérisés en ce que
$R^7$ et $R^8$ représentent des groupes tert-butyle,

$R^9$ représente un groupe $C_{17}H_{35}$ et
n est égal à 1.

**8.** Procédé de préparation des mélanges selon les revendications 1 à 7 par fusion en commun des composants.

**9.** Utilisation des mélanges selon les revendications 1 à 7 pour la fabrication de corps moulés.